# EUROPÄISCHE PATENTSCHRIFT

(11) **EP 2 435 189 B1**
(45) Veröffentlichungstag und Bekanntmachung des Hinweises auf die Patenterteilung: **01.05.2013**
(21) Anmeldenummer: 10726451.7
(22) Anmeldetag: 28.05.2010
(51) Int. Cl.: B04B 9/12, B04B 9/14

(54) **ZENTRIFUGE MIT EINEM SCHMIERMITTELSYSTEM**
CENTRIFUGE HAVING A LUBRICANT SYSTEM
CENTRIFUGEUR MUNI D'UN SYSTÈME DE LUBRIFICATION

(30) Priorität: 28.05.2009 DE 102009022972
(43) Veröffentlichungstag der Anmeldung: 04.04.2012
(73) Patentinhaber: GEA Mechanical Equipment GmbH, 59302 Oelde (DE)
(72) Erfinder: MACKEL, Wilfried, 59510 Lippetal (DE); SEDLER, Marie-Theres, 59329 Wadersloh (DE); BATHELT, Thomas, 59302 Oelde (DE); KLEIMANN, Thomas, 59302 Oelde (DE); PENKL, Andreas, 59510 Lippetal (DE); TERWEY, Bernd, 48653 Coesfeld (DE)
(74) Vertreter: Specht, Peter
(86) Internationale Anmeldenummer: PCT/EP2010/057448
(87) Internationale Veröffentlichungsnummer: WO 2010/136579

(56) Entgegenhaltungen:
- EP-A2- 0 266 765
- EP-A2- 1 462 178
- WO-A1-03/080250
- DE-B- 1 014 349
- GB-A- 799 484

## Beschreibung

Die Erfindung betrifft eine Zentrifuge, insbesondere einen Separator mit vertikaler Drehachse, nach dem Oberbegriff des Anspruchs 1, wie dieser aus WO-A-03/080250 bereits bekannt ist.

Derartige, insbesondere für einen industriellen Einsatz im kontinuierlichen Betrieb geeignete Zentrifugen, insbesondere Separatoren, sind aus dem Stand der Technik an sich bekannt. Unter den bekannten Systemen gibt es Konstruktionen, bei denen die Trommel, die Antriebsspindel und der elektrische Antriebsmotor starr zu einer baulichen Einheit verbunden sind, welche dann als Ganzes elastisch an einem Maschinengestell abgestützt ist. Beispiele eines derartigen Standes der Technik offenbaren die FR 1.287.551, die DAS 1 057 979 und die DE 43 14 440 C1.

Zum technologischen Hintergrund werden zudem die DE 44 08 182 genannt, die einen Riemenantrieb für einen Separator offenbart, sowie die EP 0 756 897 und die WO 98/57752.

Die DE 2005 001 539 U1 zeigt einen Antriebsriemen aufweisenden Separator mit einem kreislaufartigen Schmiersystem zur Schmierung der Spindellagerung, das eine rohrartige, schälscheibenartige Einrichtung zum Abpumpen von Schmiermittel aufweist, die dazu dient, Schmiermittel, welches aus der Lagerung der Antriebsspindel des Separatorantriebs austritt, über ein Aufbereitungsaggregat in einen Schmiermittelsumpf zu pumpen, in welchen die als Hohlspindel ausgebildete Antriebsspindel mit ihrem unteren Ende eintaucht. Diese Anordnung ist axial aber immer noch relativ lang.

Aus der WO 2007/125066 A1 ist ein Separator mit einem Direktantrieb bekannt, dessen Antriebsvorrichtung einen elektrischen Antriebsmotor mit einem Stator und einem Motorläufer aufweist, welcher mit der Antriebsspindel fluchtet, wobei der Stator starr mit dem Maschinengestell verbunden ist und der Motorläufer, die Antriebsspindel, die Schleudertrommel und das Gehäuse eine elastisch an dem Maschinengestell abgestützte, im Betrieb schwingende Einheit bilden. Dabei wird die Lagereinrichtung zwischen dem Motor und der Trommel angeordnet. Es wird ferner vorgeschlagen, die Schmierung der Lagereinrichtungen oberhalb einer Trennwand über dem Antriebsmotor unterzubringen.

Die Erfindung hat vor diesem Hintergrund die Aufgabe, den Aufbau und die Anordnung des Schmiersystems von Zentrifugen, insbesondere Separatoren mit vertikaler Drehachse, weiter zu verbessern.

Die Erfindung erreicht dieses Ziel durch den Gegenstand des Anspruchs 1.

Danach ist zum Fördern des Schmiermittels wenigstens eine dem Schmiermittel-Vorratsbehälter nachgeordnete Einspritzvorrichtung vorgesehen, die zur Abgabe von (geringen) Schmiermittelmengen in zeitlich voneinander getrennten Impulsen mit einem zeitlich begrenzten Luftstrom in den Bereich der Lagerung ausgelegt ist. Auf diese Weise ist der Schmiermittelbedarf stark reduzierbar, insbesondere, wenn der Ölimpuls als Nebel in den Bereich der Lagerung eingeblasen wird.

Die Einspritzvorrichtung wird vorzugsweise als Einspritzöler ausgelegt. Solche Einspritzöler weisen in der Regel einen Kolben auf. Damit werden am Separator nach einer besonders bevorzugten Variante in Intervallen geringe Schmiermittelmengen in den Lagerbereich abgegeben, z.B. weniger als 100 mm³ pro Impuls.

Der Einsatz von Einspritzölern im Bereich der Schmierung einer Zentrifugenlagerung wurde bisher nicht angedacht. Es hat sich aber entgegen ursprünglicher Erwartung herausgestellt, dass es möglich ist, mit einem derartigen Einspritzöler selbst einen für den industriellen Einsatz gedachten Separator mit nur sehr wenig Schmiermittel hinreichend zu schmieren, ohne dass der Dauerbetrieb beeinträchtigt wird.

Durch die Verwendung eines Einspritzölers kann der Schmiermittelverbrauch somit auf außerordentlich geringe Menge reduziert werden, z:B. auf weniger als 30 l pro Betriebsjahr (über 8000 h).

Dabei kann der Einspritzöler dazu ausgelegt sein, mit einer Mikropumpe bis zu zwei Sekunden lang eine Schmiermittelmenge abzugeben, vorzugsweise derart, dass zwischen den einzelnen Impulsen mehr als 60 sec Pausen liegen und dass jeder Impuls bis zu zwei Sekunden, vorzugsweise eine Sekunde, lang ist.

Der Einspritzöler ist vorzugsweise sowie vorteilhaft dazu ausgelegt, mit einem Kolben je Impuls bis zu zwei Sekunden lang eine Schmiermittelmenge abzugeben, wobei der Einspritzöler ferner vorzugsweise derart eingestellt ist, dass zwischen den einzelnen Impulsen mehr als 60 sec Pause liegen, vorzugsweise 60 sec bis 180 sec.

Insbesondere ist der Einspritzöler ist vorteilhaft vorzugsweise dazu ausgelegt, mit einem Kolben vorzugsweise alle 60 sec bis 180 sec eine Schmiermittelmenge zwischen 5 mm³ und 100 mm³ abzugeben, vorzugsweise zwischen 10 mm³ und 40 mm³

Es wird mit wenigen Bauteilen eine besonders wenig Schmiermittel verbrauchende Schmiermittelversorgung realisiert. Dabei eignet sich die Konstruktion sowohl für einen Antrieb über einen Riementrieb als auch für verschiedene Arten von Direktantrieben mit einem in axialer Verlängerung der Antriebsspindel oder auf der Antriebsspindel angeordneten Antriebsmotor. Diese Anordnungen ermöglichen auch die Realisierung einer in vertikaler Richtung kurzen Bauform der Antriebsvorrichtung.

Anzumerken ist, dass die Zentrifuge auch als Vollmantel-Schneckenzentrifuge ausgelegt sein kann. Hierzu wird auf die Ansprüche 17 bis 20 verwiesen.

Wenn die Zentrifuge als Vollmantel-Schneckenzentrifuge ausgebildet ist, welche beidseits einer drehbaren Trommel als Lagerung jeweils wenigstens ein Lager aufweist, welche jeweils in einem ringartigen Gehäuse gelagert sind, ist es vorteilhaft, wenn mit der wenigstens einen Einspritzvorrichtung Schmiermittel aus dem Schmiermittel-Vorratsbehälter in den Bereich von einem oder beiden der Lager förderbar ist.

Geschaffen wird auch ein Verfahren zum Zuleiten von Schmiermittel in den Bereich wenigstens eines Lagers für eine Zentrifuge nach einem der darauf gerichteten Ansprüche, bei dem in vorteilhafter und schmierstoffsparender Weise mit wenigstens einem Einspritzöler jeweils ein ÖL/Luftgemisch impulsartig in den Bereich des wenigstens einen Lagers gespritzt wird.

Vorteilhafte Ausgestaltungen sind den Unteransprüchen zu entnehmen.

Die Spindel kann - da vorzugsweise sie nicht für den Schmiermittelkreislauf verwendet wird - für andere Aufgaben wie eine Produktzufuhr - z.B. durch eine Hohlspindel - genutzt werden.

Nachfolgend wird die Erfindung anhand eines Ausführungsbeispiels unter Bezug auf die Zeichnung näher beschrieben. Es zeigt:
- Fig. 1 bis 3: teilgeschnittene Ansichten schematisiert dargestellter Antriebe für Separatoren

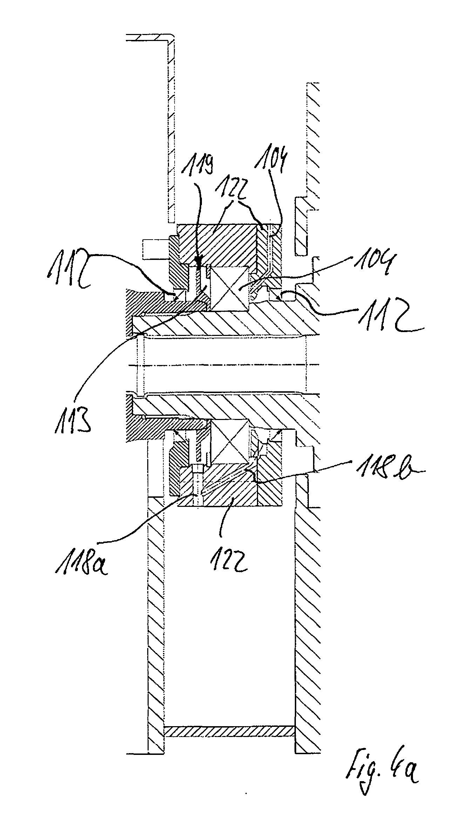

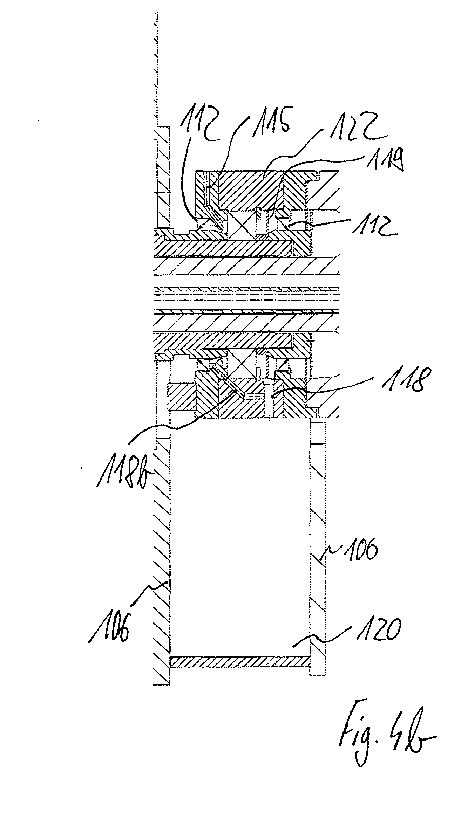

- Fig. 4a,b: geschnittene Ansichten von Lagerbereichen einer Vollmantel-Schneckenzentrifuge; und
- Fig. 5: eine schematische, teilgeschnittene Ansicht einer Vollmantel-Schneckenzentrifuge.

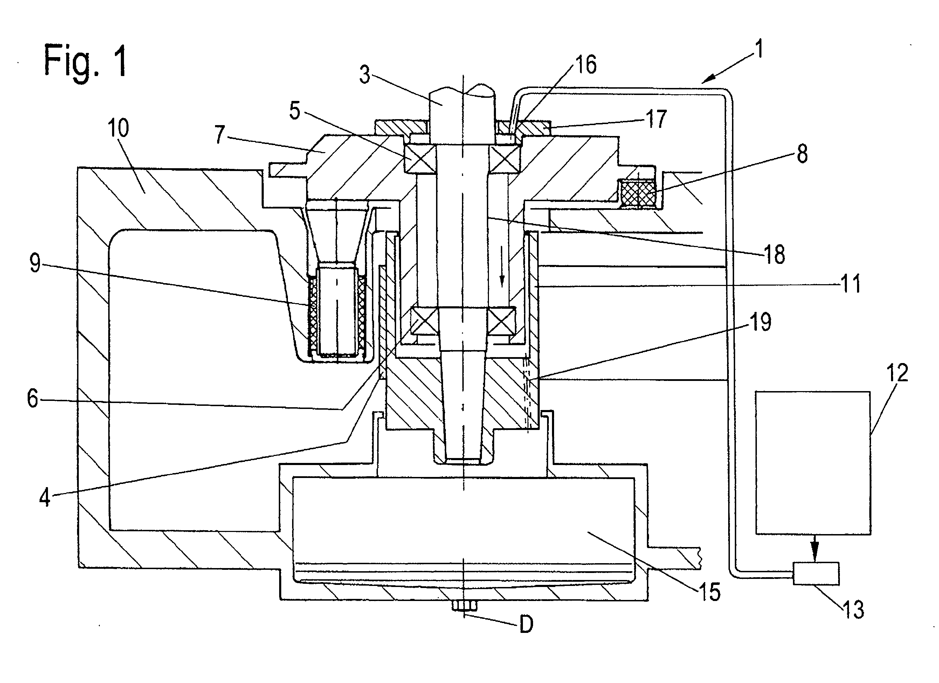

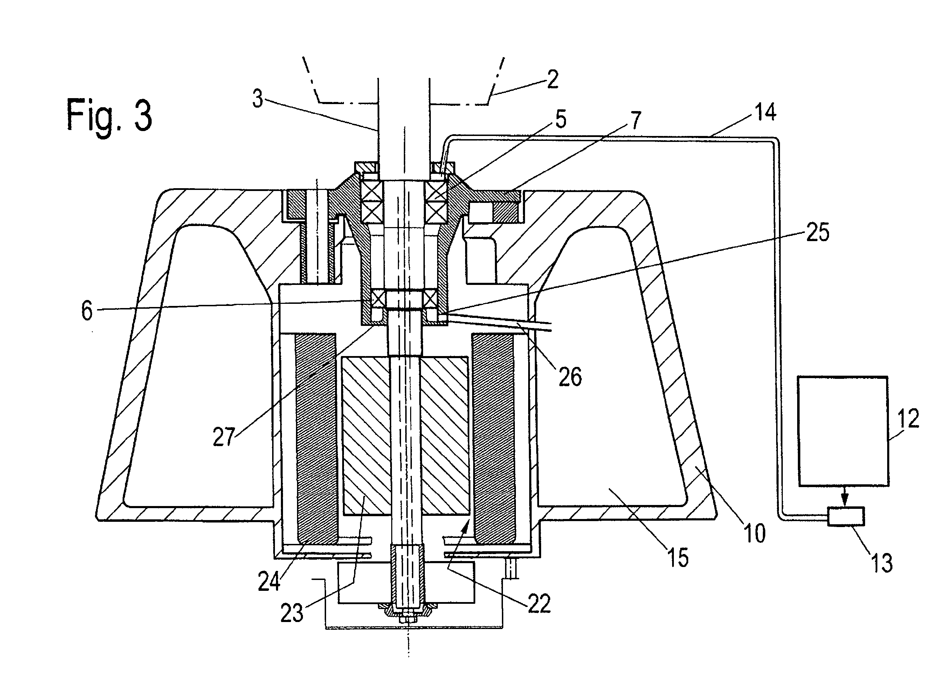

Fig. 1 zeigt einen Teilbereich eines Separators 1 mit einer in Fig. 3 schematisch angedeuteten Schleudertrommel 2 mit vertikaler Drehachse D (und einer hier nicht dargestellten) Zulaufleitung für ein zu verarbeitendes Schleudergut.

Die Schleudertrommel 2 ist auf eine Antriebsspindel 3 aufgesetzt. Eine Haube und ein Feststoffänger sind in der Figur nicht dargestellt.

Nach Fig. 1 wird die Antriebsspindel 3 über einen Antriebsriemen 4 angetrieben, welcher eine auf die Antriebsspindel 3 aufgesetzte ein- oder mehrteilige Riemenscheibe 11 und eine hier nicht dargestellte Antriebswelle eines Antriebsmotors umschlingt. Die Antriebsspindel 3 ist mit einer Lagerung, die hier ein (oberes Lager) Halslager 5 und ein (unteres Lager) Fußlager 6 umfasst, drehbar in einem Gehäuse 7 gelagert. Beispielhaft weisen das Halslager und das Fußlager 5, 6 hier ein einziges Wälzlager auf. Andere Ausgestaltungen beispielsweise mit zwei Halslagern oder Fußlagern wären denkbar (hier nicht dargestellt).

Das Gehäuse 7 ist mittels einem oder mehreren elastischen Elementen 8, 9, z.B. mittels Rundlagern und/oder Ultrabuchsen oder dgl., an einem Maschinengestellabschnitt 10 abgestützt, der als Teil eines übergeordneten Maschinengestells ausgelegt oder an einer Decke eines Gebäudes oder dgl. befestigt sein kann.

Die Darstellung des Gehäuses 7 - hier mit einem Flansch - ist beispielhaft zu verstehen. Wesentlich ist, dass es im Betrieb elastisch am Maschinengestell 10 angestützt ist, wobei es im Betrieb drehfest ausgelegt ist. Es nimmt die Lager 5, 6 auf, in welchen sich die Antriebsspindel 3 dreht.

Zur Versorgung der Lagerung der Antriebsspindel mit Schmierstoff dient ein Schmiermittelsystem, welches einen Schmiermittel-Vorratsbehälter 12 aufweist, wenigstens eine dem Schmiermittel-Vorratsbehälter 12 nach geschaltete Einspritzvorrichtung 13 zur Abgabe von (geringen) Schmiermittelmengen in vorzugsweise zeitlich voneinander getrennten Impulsen mit zeitlich begrenztem Luftstrom. Danach wird kein permanenter Luftstrom verwendet sondern ein Luftstromimpuls, dem die Schmiermittelmenge zugeführt wird.

Vorgesehen sind ferner eine der Einspritzvorrichtung 13 nachgeordnete Schmiermittel-Zuleitung 14 zur Zuleitung von Schmiermittel von der Einspritzvorrichtung 13 in den Bereich der Lagerung mit den Lagern 5, 6 und ein Schmiermittel-Auffangbehälter 15 zur Aufnahme von aus dem Bereich der Lagerung abtropfende Restölmengen.

Die der Einspritzvorrichtung 13 nachgeschaltete Zuleitung kann als Druckölleitung ausgebildet sein.

Vorzugsweise erstreckt sich die Schmiermittel-Zuleitung 14 bis in den Bereich des Halslagers 5, vorzugsweise bis in den Bereich oberhalb des Halslagers 5.

Vorzugsweise ist nur eine Einspritzvorrichtung vorgesehen. Von der einen oder den mehreren Einspritzvorrichtung(en) kann aber auch ein einzelnes Versorgen einzelner der Lagerstellen oder aller vorgesehenen Lagerstellen (Lager der Lagerung) erfolgen, wozu es dann zweckmäßig ist, zu jeder dieser Lagestellen jeweils eine Schmiermittel-Zuleitung 14 sowie ggf. von dieser fort eine entsprechende Ableitung zu legen (nicht dargestellt). Es ist dann auch möglich, jeder Lagerstelle bzw. jedem der Lager vorteilhaft eine individuell optimiert bemessene Schmiermittelmenge zuzuführen.

Hier durchsetzt sie eine Bohrung 16 an einem mit dem Gehäuse 7 verbundenen Gehäuseteil 17.

Derart sprüht aus dem offenen Ende der Bohrung austretendes Schmiermittel von oben vorzugsweise nebelartig in die Lagerung der Antriebsspindel 3.

Nach Fig. 1 fließt das Schmiermittel zunächst durch das Halblager 5, von dort durch einen Ableitungskanal 18 - hier einen Ringraum - am Außenumfang der Antriebsspindel 3 in und durch das Fußlager 6 und sodann durch in Ableitungskanal 19 in der Riemenscheibe 11 und ggf. weiteren, hier nicht dargestellten Elementen.

Die Riemenscheibe 11 weist hier eine nach unten geschlossene topfartige Form auf. Im Bodenbereich ist sie drehfest mit der Antriebsspindel 3 verbunden. Um ihren Außenmantel ist der Antriebsriemen gelegt. Nach unten hin ist die Riemenscheibe 11 bis auf den Ableitungskanal 19 geschlossen ausgebildet, derart, dass aus den Lagern 5, 6 vertikal nach unten austretenden Schmiermittel vollständig durch den Ableitungskanal 19 aus der Riemenscheibe 11 bzw. der Riemenscheibenanordnung nach außen geleitet wird.

Ein unteres Ende der Riemenscheibe 11 oder der ggf. weiteren Elemente ragt in den Schmiermittel-Auffangbehälter 15 hinein, so dass aus dem Antriebsbereich abtropfendes Schmiermittel 20 in dem Schmiermittel-Auffangbehälter 15 aufgefangen und gesammelt wird.

Als Einspritzvorrichtung 13 wird vorzugsweise ein Einspritzöler zur Dosierung geringer Schmiermittelmengen verwendet.

Im Schmiermittel-Auffangbehälter 13 sammelt sich das gebrauchte Öl.

Es ist damit nur außerordentlich selten notwendig, im Betrieb eine Rest-Schmiermittelmenge zu entsorgen.

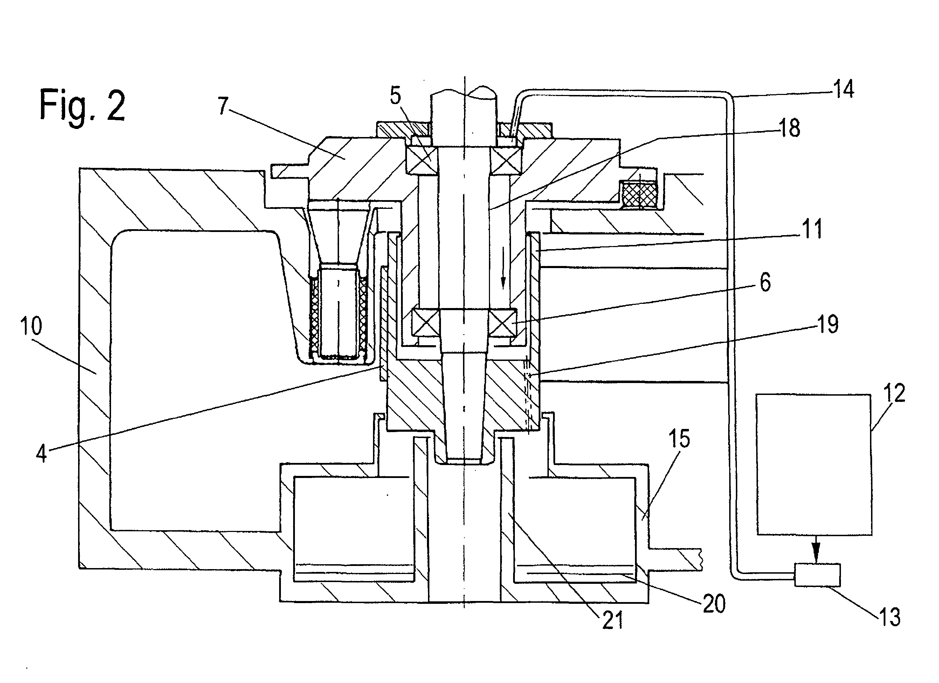

Nach Fig. 2 ist vorgesehen, dass das untere freie Ende der Antriebsspindel 3 in einen nach oben und unten offenen Rohrabschnitt 21 im Schmiermittel-Auffangbehälter 15 eintaucht, welcher diesen vertikal durchsetzt, so dass es möglich ist, als Antriebsspindel 3 ggf. auch eine Hohlspindel - hier nicht dargestellt - zu verwenden, um durch diese Produkt in die Schleudertrommel zu leiten.

Nach Fig. 3 ist als Antrieb für den Separator ein sogenannter Direktantrieb vorgesehen, bei welchem ein elektrischer Antriebsmotor 22 direkt mit der Antriebsspindel 3 fluchtet.

Beispielhaft ist nach Fig. 3 vorgesehen, dass der Motorläufer 23 direkt auf der Antriebsspindel angeordnet ist und der Stator 24 des Antriebsmotors am sich nicht drehenden Maschinengestell (nicht im Detail dargestellt).

Die Lagerung und das Schmiermittelsystem entsprechen zunächst in Hinsicht auf die Zuleitung des Schmiermittels in den Bereich der Lagerung mit den Lagern 5, 6 dem Aufbau der Fig. 1 und 2.

Das aus dem Fußlager 5, 6 austretende Schmiermittel wird durch einen Ableitungskanal 25, welcher das Gehäuse 7 durchsetzt, abgeleitet. Hier ist vorgesehen, dass der Ableitungskanal 25 mit einer Leitung 26 fluchtet, welche wiederum in den Schmiermittel-Auffangbehälter 15 mündet, welcher hier in das Maschinengestell 10 integriert ist. Der Schmiermittel-Auffang-behälter 15 ist seitlich des Antriebsmotors 22 ausgebildet. Er kann diesen auch nach Art eines Ringbehälters umgeben. Die Leitung 26 kann flexibel ausgelegt sein, damit sie Bewegungen des Gehäuses 7 mit vollziehen kann.

Der Bereich zwischen der Antriebsspindel 3 und dem Gehäuse 7 wird vorzugsweise abgedichtet, vorzugsweise mit einer Gleitringdichtung 27 (hier nur angedeutet), um zu verhindern, dass Schmiermittel in den Bereich des Antriebsmotors 22 tropfen kann. Alternativ ist es auch denkbar, den Bereich zwischen der Antriebsspindel 3 und dem Auffangraum bzw. Schmierstoff-Auffangbehälter 15, abzudichten.

Die Schmiermittel-Auffangbehälter 15 werden vorzugsweise jeweils mit einer verschließbaren Ablassöffnung versehen, um ggf. Alt-Schmiermittelreste ablassen zu können.

Es ist denkbar, die Schmiermittel-Vorratsbehälter 12 und/oder Schmiermittel-Auffangbehälter an verschiedenster Stelle in das Maschinengestell 10 zu integrieren oder aber an diesen separate Behältnisse für den jeweiligen Zweck anzuordnen.

Während der Ableitungskanal 25 in Fig. 3 unterhalb des Fußlagers 6 angeordnet ist, wäre es theoretisch auch denkbar, ihn zwischen dem Fußlager 6 und dem Halslager 5 anzuordnen. Die dargestellte Variante wird aber bevorzugt, da sie sämtliche Schmiermittelreste aus dem Lagerbereich gut ableitet.

Wie bereits eingangs angemerkt, kann die Zentrifuge auch als Vollmantel-Schneckenzentrifuge ausgelegt sein kann.

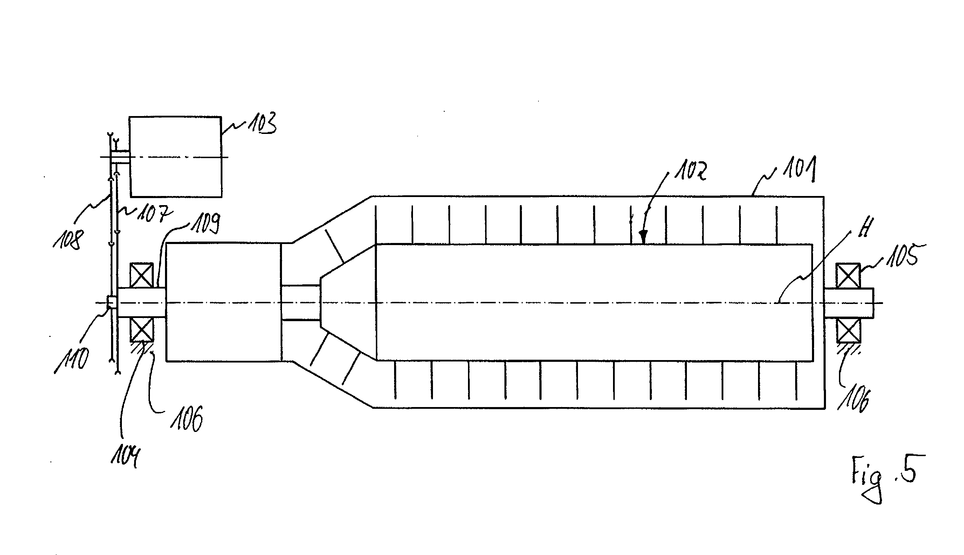

Fig. 5 zeigt eine Vollmantel-Schneckenzentrifuge - auch Dekanter genannt - mit einer drehbaren Trommel 101 mit einer vorzugsweise horizontalen Drehachse H und einer innerhalb der Trommel 101 angeordneten ebenfalls drehbaren Schnecke 102 sowie mit einem Antriebsmotor 103 zum Drehen der Trommel 101 und der Schnecke 102.

Die Trommel 101 der Figur 5 ist zwischen einem antriebsseitigen und einem antriebsabgewandten Trommellager 104, 105 als Lagerung angeordnet und mit diesen Trommellagern 104, 105 an einem nicht im Detail dargestellten Maschinengestell/Fundament 106 drehbar gelagert.

Zum Antrieb dient hier beispielhaft der Antriebsmotor 103, der über Riementriebe 107, 108 Getriebeeingangswellen 109, 110 (welche der einen oder mehreren Antriebsspindel entsprechen) antreibt, mit welchen über eine oder mehrere Getriebeanordnung(en) (bei 111) die Schnecke 102 und die Trommel 101 gedreht werden. Andere Antriebsanordnungen sind denkbar. Nicht dargestellt sind ein Produktzulauf und entsprechende Abläufe für wenigstens eine Flüssigkeitsphase und eine Feststoffphase. Diese letzteren Elemente sind dem Fachmann aber an sich bekannt und müssen daher hier nicht gezeigt werden.

An dem Maschinengestell 106 wird in (in Fig. 5 nicht dargestellter Weise; vorzugsweise ähnlich zu Fig. 1) das Schmiermittelsystem zur Schmierung der Lagerung angeordnet, das dazu ausgelegt ist, Schmiermittel aus einem Schmiermittel-Vorratsbehälter zu fördern. Der Schmiermittel-Vorratsbehälter wird vorzugsweise in das Maschinengestell integriert. Das System weist wenigstens eine dem Schmiermittel-Vorratsbehälter nachgeordnete Einspritzvorrichtung auf, die zur Abgabe von (geringen) Schmiermittelmengen in zeitlich voneinander getrennten Impulsen jeweils mit einem zeitlich begrenzten Luftstrom in den Bereich der Lagerung ausgelegt ist.

Der wenigstens Einspritzvorrichtung ist dazu eine Schmiermittel-Zuleitung 114 (symbolisch als Pfeil dargestellt) nachgeschaltet, welche jeweils in einem Gehäuse (Lagergehäuse) 122 der Lager 104, 105 eine Bohrung 115 aufweist (bzw. welche in eine solche mündet) ist, mit welcher das Schmiermittel in den Bereich von einem oder beiden der Lager (oberhalb der Lager oder seitlich der Lager an der vorzugsweise horizontalen Spindel) 104, 105 förderbar ist.

Vorzugsweise ist nur eine Einspritzvorrichtung vorgesehen. Von der einen oder den mehreren Einspritzvorrichtung(en) kann aber auch ein einzelnes Versorgen einzelner der Lagerstellen oder aller vorgesehenen Lagerstellen (Lager 104, 105 der Lagerung) erfolgen, wozu es dann zweckmäßig ist, zu jeder dieser Lagestellen jeweils eine Schmiermittel-Zuleitung 114 sowie ggf. von dieser fort eine entsprechende Ableitung zu legen (nicht dargestellt). Es ist dann auch möglich, jeder Lagerstelle bzw. jedem der Lager vorteilhaft eine individuell optimiert bemessene Schmiermittelmenge zuzuführen.

Nach Fig. 5 wird das Schmiermittel von oben vorzugsweise nebelartig in die Lagerungen 104, 105 gespritzt.

Derart fließt das Schmiermittel durch das jeweilige Lager 104, 105 zu den in vertikaler Richtung unteren Bereichen der Lager 104, 105 und von dort durch wenigstens einen Ableitungskanal oder zwei Ableitungskanäle 118a, 118b unterhalb und vorzugsweise einseitig oder beidseitig des jeweiligen Wälzlagers in einen Schmiermittel-Auffangbehälter 120 unterhalb der jeweiligen Lager, vorzugsweise integriert in das Maschinengestell.

Durch die Bohrung 115 wird wie eingangs zum Separator beschrieben ein Luftstrom mit Öl gespritzt. Die Bohrung 115 kann hier und auch in anderen Ausführungen eine Verengung aufweisen, so dass - vorzugsweise vor dem Austritt - eine Düse gebildet wird. Die Düse hat einen geringeren, vorzugsweise einen um 0,1 bis 0,5 mm geringeren Durchmesser als die Bohrung 115.

Es ist dabei vorteilhaft, wenn die Bohrungen 115 einen Durchmesser von 0,3 mm bis 5 mm aufweisen. Vorteilhaft erscheint insbesondere ein Durchmesser von 0,5 mm bis 1, 2 mm, besonders bevorzugt von 0,8 bis 1,2 mm, um sicher 1 - 100 mm³ pro Impuls, besonders bevorzugt 3 - 20 mm³ pro Impuls an Schmierstoff zuzuführen

Zwischen den Impulsen vergehen vorzugsweise mehr als 10 sec, bevorzugt mehr als 60 sec.

Es sind Dichtmittel, vorzugsweise Wellendichtringe 112 beidseits des Lagers denkbar, um den jeweiligen Wälzlagerraum 113 abzudichten, durch welchen das Öl fließen kann. Das Dichtmittel kann als Wellendichtring ausgebildet sein oder als sein oder Lamellenabdichtung oder als andere Dichtungen z.B. als doppelt wirkende Dichtung und/oder als schleifende Dichtung. Denkbar sind auch Gleitringdichtungen, wenn eine besonders hohe Dichtigkeit erzeugt werden soll.

Ein optionaler Leitring 119 zwischen dem jeweiligen Lager 104, 105 und Dichtmittel optimiert vorzugsweise die Ableitung des Schmiermittels in den oder die Ableitungskanäle 118 a, b.

### Bezugszeichen

| | |
|---|---|
| Separator | 1 |
| Schleudertrommel | 2 |
| Antriebsspindel | 3 |
| Antriebsriemen | 4 |
| Halslager | 5 |
| Fußlager | 6 |
| Gehäuse | 7 |
| elastische Elemente | 8, 9 |
| Maschinengestellabschnitt | 10 |
| Riemenscheibe | 11 |
| Schmiermittel-Vorratsbehälter | 12 |
| Einspritzvorrichtung | 13 |
| Zuleitung | 14 |
| Schmiermittel-Auffangbehälter | 15 |
| Bohrung | 16 |
| Gehäuseteil | 17 |
| Ableitungskanal | 18 |
| Ableitungskanal | 19 |
| Schmiermittel | 20 |
| Rohrabschnitt | 21 |
| Antriebsmotor | 22 |
| Motorläufer | 23 |
| Stator | 24 |
| Ableitungskanal | 25 |
| Leitung | 26 |
| Gleitringdichtung | 27 |
| Trommel | 101 |
| Schnecke | 102 |
| Antriebsmotor | 103 |
| Trommellager | 104, 105 |
| Maschinengestell/Fundament | 106 |
| Riementriebe | 107, 108 |
| Getriebeeingangswelle | 109, 110 |
| Getriebeanordnung | 111 |
| Wellendichtringe | 112 |
| Wälzlagerraum | 113 |
| Schmiermittel-Zuleitung | 114 |
| Bohrung | 115 |
| Ableitungskanal | 118 |
| Ableitungskanäle | 118a, 118b |
| Leitring | 119 |
| Schmiermittel-Auffangbehälter | 120 |
| Lagergehäuse | 122 |
| Drehachse | D, H |

## Patentansprüche

1. Zentrifuge, die folgendes aufweist:
a. eine drehbare Schleudertrommel (2),
b. eine Antriebsspindel (3) für die Schleudertrommel, die mittels wenigstens einer Lagerung drehbar in wenigstens einem Gehäuse (7) gelagert ist, welches vorzugsweise elastisch an einem Maschinengestell (10) abgestützt ist,
c. eine Antriebsvorrichtung mit einem Antriebsmotor, der dazu ausgelegt ist, die Antriebsspindel (3) zu drehen,
d. ein Schmiermittelsystem zur Schmierung der Lagerung, das dazu ausgelegt ist, Schmiermittel aus einem Schmiermittel-Vorratsbehälter (12) durch einen Schmiermittelkanal (14) in den Bereich der Lagerung zu fördern,
**dadurch gekennzeichnet, dass**
e. zum Fördern des Schmiermittels wenigstens eine dem Schmiermittel-Vorratsbehälter (12) nachgeordnete Einspritzvorrichtung (13) vorgesehen ist, die zur Abgabe von (geringen) Schmiermittelmengen in zeitlich voneinander getrennten Impulsen jeweils mit einem zeitlich begrenzten Luftstrom in den Bereich der Lagerung ausgelegt ist.

2. Zentrifuge nach Anspruch 1, **dadurch gekennzeichnet, dass** sie wie folgt ausgebildet ist: als Separator (1) mit vertikaler Drehachse (D), die mittels der Lagerung, die wenigstens ein Halslager (5) und wenigstens ein Fußlager (6) aufweist, drehbar in dem Gehäuse (7) gelagert ist, welches elastisch an dem Maschinengestell (10) abgestützt ist, wobei mit der Einspritzvorrichtung (13) Schmiermittel aus einem Schmiermittel-Vorratsbehälter (15) in den Bereich des Halslagers (5) oder in den Bereich oberhalb des Halslagers (5) förderbar ist.

3. Zentrifuge nach Anspruch 2, **dadurch gekennzeichnet, dass** der Einspritzvorrichtung (13) eine Schmiermittel-Zuleitung (14) nachgeschaltet ist, mit welcher das Schmiermittel in den Bereich des Halslagers (5) oder in den Bereich oberhalb des Halslagers (5) förderbar ist.

4. Zentrifuge nach Anspruch 2 oder 3, **dadurch gekennzeichnet, dass** der elektrische Antriebsmotor (22) mit der Antriebsspindel (3) fluchtet und dazu ausgelegt ist, direkt die Antriebsspindel (3) zu drehen.

5. Zentrifuge nach einem der vorstehenden Ansprüche, **dadurch gekennzeichnet, dass** die Antriebsvorrichtung mit dem vorzugsweise elektrischen Antriebsmotor (22) dazu ausgelegt ist, über einen Antriebsriemen (4) die Antriebsspindel (3) zu drehen.

6. Zentrifuge nach einem der vorstehenden Ansprüche, **dadurch gekennzeichnet, dass** der Bereich der Lagerung derart ausgelegt ist, dass Schmiermittel durch die Lagerung fließt und dass das Schmiermittel sodann durch eine Ableitung (19, 26) aus dem Bereich der Lagerung in einen Schmiermittel-Auffangbehälter (15) abgeleitet wird.

7. Zentrifuge nach einem der vorstehenden Ansprüche, **dadurch gekennzeichnet, dass** die Antriebsspindel (3) derart angeordnet ist, dass ihr freies Ende durch den Schmiermittel-Auffangbehälter (15) geführt ist.

8. Zentrifuge nach einem der vorstehenden Ansprüche, **dadurch gekennzeichnet, dass** die Antriebsspindel (3) derart angeordnet ist, dass ihr freies Ende nicht durch den Schmiermittel-Auffangbehälter (15) geführt ist..

9. Zentrifuge nach einem der vorstehenden Ansprüche, **dadurch gekennzeichnet, dass** die Schmiermittel-Zuleitung (14) eine Bohrung (16) an dem Gehäuse (7) oder an einem mit dem Gehäuse (7) verbundenen Gehäuseteil (17) durchsetzt und dass das Schmiermittel zunächst durch das Halslager (5), von dort durch einen Ableitungskanal (18) in das Fußlager (6) und sodann durch einen Ableitungskanal (19) in der Riemenscheibe und ggf. weiteren, hier nicht dargestellten Elementen in den Schmiermittel-Auffangbehälter (15) abfließt.

10. Zentrifuge nach einem der vorstehenden Ansprüche, **dadurch gekennzeichnet, dass** als Einspritzvorrichtung (13) ein Einspritzöler zur Dosierung geringer Schmiermittelmengen verwendet wird.

11. Zentrifuge nach einem der vorstehenden Ansprüche, **dadurch gekennzeichnet, dass** der Einspritzöler dazu ausgelegt ist, mit einem Kolben bis zu zwei Sekunden lang eine Schmiermittelmenge abzugeben und dass der Einspritzöler vorzugsweise ferner derart eingestellt ist, dass zwischen den einzelnen Impulsen mehr als 60 sec Pause liegen, vorzugsweise 60 sec bis 180 sec..

12. Zentrifuge nach einem der vorstehenden Ansprüche, **dadurch gekennzeichnet, dass** der Einspritzöler dazu ausgelegt ist, mit einem Kolben vorzugsweise alle 60 sec bis 180 sec eine Schmiermittelmenge zwischen 5 mm³ und 100 mm³ abzugeben, vorzugsweise zwischen 10 mm³ und 40 mm³

13. Zentrifuge nach einem der vorstehenden Ansprüche, **dadurch gekennzeichnet, dass** der Schmiermittel-Auffangbehälter (15) mit einer verschließbaren Ablassöffnung versehen ist.

14. Zentrifuge nach einem der vorstehenden Ansprüche, **dadurch gekennzeichnet, dass** die Schmiermittel-Vorratsbehälter (12) und/oder der Schmiermittel-Auffangbehälter (15) in das Maschinengestell integriert sind.

15. Zentrifuge nach einem der vorstehenden Ansprüche, **dadurch gekennzeichnet, dass** die Schmiermittel-Vorratsbehälter (12) und/oder der Schmiermittel-Auffangbehälter (15) an dem Maschinengestell (10) als separate Behältnisse ausgebildet sind.

16. Zentrifuge nach einem der vorstehenden Ansprüche, **dadurch gekennzeichnet, dass** ein Bereich zwischen der Antriebsspindel (3) und dem Gehäuse (7) abgedichtet ist.

17. Zentrifuge nach einem der vorstehenden Ansprüche 1 oder 3 bis 14, **dadurch gekennzeichnet, dass** sie als Vollmantel-Schneckenzentrifuge ausgebildet ist, welche beidseits einer drehbaren Trommel (101) als Lagerung jeweils wenigstens ein Lager (104, 105) aufweist, welche jeweils in einem ringartigen Gehäuse (122) angeordnet sind, wobei mit der wenigstens einen Einspritzvorrichtung (13) Schmiermittel aus wenigstens einem Schmiermittel-Vorratsbehälter (15) in den Bereich des einen oder der beiden Lager (104, 105) förderbar ist.

18. Zentrifuge nach Anspruch 17, **dadurch gekennzeichnet, dass** die Drehachse (H) horizontal ausgerichtet ist und dass das Gehäuse (122) eine Bohrung (115) aufweist, durch welche das Schmiermittel in den Bereich von einem oder beiden der Lager (104, 105) - oberhalb der Lager oder seitlich der Lager an der horizontalen Spindel - förderbar ist.

19. Zentrifuge nach Anspruch 17 oder 18, **dadurch gekennzeichnet, dass** ein Ableitungskanal (118) oder zwei Ableitungskanäle (1118a, 118b) unterhalb des jeweiligen Lagers (104, 105) vorgesehen ist, welcher oder welche direkt oder über einen weiteren Ableitungskanal in einen Schmiermittel-Auffangbehälter (120) mündet.

20. Zentrifuge nach Anspruch 17, 18 oder 19, **dadurch gekennzeichnet, dass** die Bohrung (115) - vorzugsweise vor ihrem Austritt - eine Düse ausbildet oder aufweist.

21. Zentrifuge nach Anspruch 17, 18, 19 oder 20, **dadurch gekennzeichnet, dass** Dichtmittel beidseits der Lager (104, 105) vorgesehen sind.

22. Verfahren zum Zuleiten von Schmiermittel in den Bereich wenigstens eines Lagers für eine Zentrifuge nach einem der vorstehenden Ansprüche, **dadurch gekennzeichnet, dass** mit wenigstens einem Einspritzöler jeweils ein ÖL/Luftgemisch impulsartig in den Bereich des wenigstens einen Lagers gespritzt wird.

## Claims

1. A centrifuge having the following:
a. a rotatable centrifugal drum (2),
b. a drive spindle (3) for the centrifugal drum, which is mounted in a rotatable manner, by way of at least one bearing means, in at least one housing (7), which is supported preferably elastically on a machine framework (10),
c. a drive device with a drive motor, which is designed in order to rotate the drive spindle (3),
d. a lubricant system for lubricating the bearing means, which is designed in order to deliver lubricant out of a lubricant-supply tank (12), through a lubricant channel (14), into the region of the bearing means, **characterized in that**
e. at least one injection device (13), which is arranged downstream of the lubricant-supply tank (12), is provided for the purpose of delivering the lubricant, this device being designed for dispensing (small) quantities of lubricant in temporally discrete pulses, in each case with a limited-time air stream, into the region of the bearing means.

2. The centrifuge as claimed in claim 1, **characterized in that** it is designed as follows: as a separator (1) with a vertical axis of rotation (D), which is mounted in a rotatable manner, by way of the bearing means, which has at least one neck bearing (5) and at least one foot bearing (6), in the housing (7), which is supported elastically on the machine framework (10), wherein lubricant can be delivered, by means of the injection device (13), out of a lubricant-supply tank (15) into the region of the neck bearing (5) or into the region above the neck bearing (5).

3. The centrifuge as claimed in claim 2, **characterized in that** the injection device (13) has positioned downstream of it a lubricant-feed line (14), by means of which the lubricant can be delivered into the region of the neck bearing (5) or into the region above the neck bearing (5).

4. The centrifuge as claimed in claim 2 or 3, **characterized in that** the electric drive motor (22) is aligned with the drive spindle (3) and is designed in order to rotate the drive spindle (3) directly.

5. The centrifuge as claimed in one of the preceding claims, **characterized in that** the drive device, with the preferably electric drive motor (22), is designed in order to rotate the drive spindle (3) via a drive belt (4).

6. The centrifuge as claimed in one of the preceding claims, **characterized in that** the region of the bearing means is designed such that lubricant flows through the bearing means, and that the lubricant is then directed away through a discharge line (19, 26), out of the region of the bearing means, into a lubricant-intercepting tank (15).

7. The centrifuge as claimed in one of the preceding claims, **characterized in that** the drive spindle (3) is arranged such that its free end is guided through the lubricant-intercepting tank (15).

8. The centrifuge as claimed in one of the preceding claims, **characterized in that** the drive spindle (3) is arranged such that its free end is not guided through the lubricant-intercepting tank (15).

9. The centrifuge as claimed in one of the preceding claims, **characterized in that** the lubricant-feed line (14) passes through a bore (16) in the housing (7) or in a housing part (17) connected to the housing (7), and **in that** the lubricant flows out in the first instance through the neck bearing (5), from there, through a discharge channel (18), into the foot bearing (6) and then through a discharge channel (19) in the belt pulley, and possibly further elements (not illustrated here), into the lubricant-intercepting tank (15).

10. The centrifuge as claimed in one of the preceding claims, **characterized in that** the injection device (13) used is an injection lubricator for the purpose of metering small quantities of lubricant.

11. The centrifuge as claimed in one of the preceding claims, **characterized in that** the injection lubricator is designed in order to dispense a quantity of lubricant by means of a piston for up to two seconds long, and **in that** the injection lubricator, furthermore, is preferably set such that, between the individual pulses, there is a pause of more than 60 sec, preferably 60 sec to 180 sec.

12. The centrifuge as claimed in one of the preceding claims, **characterized in that** the injection lubricator is designed in order to dispense a quantity of lubricant of between 5 mm³ and 100 mm³, preferably between 10 mm³ and 40 mm³, by means of a piston preferably every 60 sec to 180 sec.

13. The centrifuge as claimed in one of the preceding claims, **characterized in that** the lubricant-intercepting tank (15) is provided with a closable outlet opening.

14. The centrifuge as claimed in one of the preceding claims, **characterized in that** the lubricant-supply tank (12) and/or the lubricant-intercepting tank (15) are/is integrated into the machine framework.

15. The centrifuge as claimed in one of the preceding claims, **characterized in that** the lubricant-supply tank (12) and/or the lubricant-intercepting tank (15) on the machine framework (10) are designed as separate tanks.

16. The centrifuge as claimed in one of the preceding claims, **characterized in that** a region between the drive spindle (3) and the housing (7) is sealed.

17. The centrifuge as claimed in one of preceding claims 1 or 3 to 14, **characterized in that** it is designed as a solid-bowl centrifuge which has as bearing means, on either side of a rotatable drum (101), in each case at least one bearing (104, 105), each arranged in a ring-like housing (122), wherein lubricant can be delivered, by means of the at least one injection device (13), out of at least one lubricant-supply tank (15) into the region of the one bearing or of the two bearings (104, 105).

18. The centrifuge as claimed in claim 17, **characterized in that** the axis of rotation (H) is oriented horizontally, and **in that** the housing (122) has a bore (115), through which the lubricant can be delivered into the region of one or both of the bearings (104, 105) - above the bearings or to the side of the bearings on the horizontal spindle.

19. The centrifuge as claimed in claim 17 or 18, **characterized by** the provision, beneath the respective bearing (104, 105), of a discharge channel (118), or two discharge channels (118a, 118b), which opens out, or open out, into a lubricant-intercepting tank (120) directly or via a further discharge channel.

20. The centrifuge as claimed in claim 17, 18 or 19, **characterized in that** the bore (115) - preferably upstream of its exit - forms, or has, a nozzle.

21. The centrifuge as claimed in claim 17, 18, 19 or 20, **characterized in that** sealing means are provided on either side of the bearings (104, 105).

22. A method of directing lubricant into the region of at least one bearing for a centrifuge as claimed in one of the preceding claims, **characterized in that** a respective oil/air mixture is injected in pulses, by means of at least one injection lubricator, into the region of the at least one bearing.

## Revendications

1. Centrifugeuse comportant :
a) un tambour centrifugeur mobile en rotation (2),
b) une broche d'entrainement (3) du tambour centrifugeur qui est montée mobile en rotation au moyen d'au moins un système de paliers dans au moins un boitier (7) qui s'appuie de préférence élastiquement sur un bâti de machine (10),
c) un dispositif d'entrainement comportant un moteur d'entrainement qui est conçu pour permettre la rotation de la broche d'entrainement (3),
d) un système d'agent de lubrification pour permettre la lubrification du système de paliers et qui est conçu de façon à fournir dans la zone du système de paliers l'agent de lubrification provenant d'un réservoir d'agent de lubrification (12) par un canal d'agent de lubrification (14),
**caractérisée en ce que**
e) pour fournir l'agent de lubrification, il est prévu au moins un dispositif d'injection (13) monté en aval du réservoir d'agent de lubrification (12) qui est conçu pour permettre de délivrer de (faibles) quantités d'agent de lubrification selon des impulsions chronologiquement séparées les unes des autres, respectivement avec un flux d'air limité dans le temps, dans la zone du système de paliers.

2. Centrifugeuse conforme à la revendication 1,
**caractérisée en ce qu'**
elle est conçue sous la forme d'un séparateur (1) d'axe de rotation vertical (D) qui est monté mobile en rotation au moyen du système de paliers qui comporte au moins un palier supérieur (5) et au moins un palier inférieur (6) dans le boitier (7), qui s'appuie élastiquement contre le bâti de machine (10), le dispositif d'injection (13) permettant de fournir de l'agent de lubrification provenant d'un réservoir d'agent de lubrification (15) dans la zone du palier supérieur (5) ou dans la zone située au-dessus de ce palier supérieur (5).

3. Centrifugeuse conforme à la revendication 2,
**caractérisée en ce qu'**
en aval du dispositif d'injection (13) est montée une conduite d'agent de lubrification (14) par laquelle l'agent de lubrification peut être fourni dans la zone du palier supérieur (5) ou dans la zone située au-dessus de ce palier supérieur (5).

4. Centrifugeuse conforme à la revendication 2 ou 3,
**caractérisée en ce que**
le moteur d'entrainement électrique (22) est monté en ligne avec la broche d'entrainement (3) et est conçu de manière à permettre de déplacer directement cette broche d'entrainement (3) en rotation.

5. Centrifugeuse conforme à l'une des revendications précédentes,
**caractérisée en ce que**
le dispositif d'entrainement avec le moteur d'entrainement (22) de préférence électrique est conçu pour permettre de déplacer la broche d'entrainement (3) en rotation au moyen d'une courroie de transmission (4).

6. Centrifugeuse conforme à l'une des revendications précédentes,
**caractérisée en ce que**
la zone du système de paliers est réalisée de sorte que de l'agent de lubrification s'écoule au travers de ce système et cet agent de lubrification est ensuite évacué par une conduite d'évacuation (19, 26) de la zone du système de paliers dans un réservoir collecteur d'agent de lubrification (15).

7. Centrifugeuse conforme à l'une des revendications précédentes,
**caractérisée en ce que**
la broche d'entrainement (3) est montée de sorte que son extrémité libre passe dans le réservoir collecteur d'agent de lubrification (15).

8. Centrifugeuse conforme à l'une des revendications précédentes,
**caractérisée en ce que**
la broche d'entrainement (3) est montée de sorte que son extrémité libre ne passe pas dans le réservoir collecteur d'agent de lubrification (15).

9. Centrifugeuse conforme à l'une des revendications précédentes,
**caractérisée en ce que**
la conduite d'alimentation en agent de lubrification (14) traverse un perçage (16) situé sur le boitier (7) ou sur une partie de boitier (17) reliée à celui-ci, et, l'agent de lubrification s'écoule tout d'abord dans le palier supérieur (5), puis par un canal d'évacuation (18) dans le palier inférieur (6) et ensuite par un canal d'évacuation (19) dans la poulie de la courroie et le cas échéant dans d'autres éléments non décrits avant d'être transféré dans le réservoir collecteur d'agent de lubrification (15).

10. Centrifugeuse conforme à l'une des revendications précédentes,
**caractérisée en ce qu'**
en tant que dispositif d'injection (13) on utilise un huileur d'injection permettant la fourniture dosée de faibles quantités d'agent de lubrification.

11. Centrifugeuse conforme à l'une des revendications précédentes,
**caractérisée en ce que**
l'huileur d'injection est réalisé pour délivrer à l'aide d'un piston une quantité d'agent de lubrification pendant une durée de jusqu'à deux secondes, et, cet huileur d'injection est de préférence en outre réglé de sorte qu'entre les différentes injections il y ait des intervalles de plus de soixante secondes, de préférence de soixante secondes à cent quatre vingt secondes.

12. Centrifugeuse conforme à l'une des revendications précédentes,
**caractérisée en ce que**
l'huileur d'injection est réalisé de façon à délivrer à l'aide d'un piston, de préférence toutes les soixante secondes à cent quatre vingt secondes une quantité d'agent de lubrification comprise entre 5 mm³ et 100 mm³, de préférence entre 10 mm³ et 40 mm³.

13. Centrifugeuse conforme à l'une des revendications précédentes,
**caractérisée en ce que**
le réservoir collecteur d'agent de lubrification (15) est équipé d'une ouverture de sortie pouvant être obturée.

14. Centrifugeuse conforme à l'une des revendications précédentes,
**caractérisée en ce que**
le réservoir d'agent de lubrification (12) et/ou le réservoir collecteur d'agent de lubrification (15) est(sont) intégré(s) dans le bâti de machine.

15. Centrifugeuse conforme à l'une des revendications précédentes,
**caractérisée en ce que**
le réservoir d'agent de lubrification (12) et/ou le réservoir collecteur d'agent de lubrification (15) est(sont) formé(s) sur le bâti de machine sous la forme de réservoirs séparés.

16. Centrifugeuse conforme à l'une des revendications précédentes,
**caractérisée en ce qu'**
une zone comprise entre la broche d'entrainement (3) et le boitier (7) est étanchéifiée.

17. Centrifugeuse conforme à l'une des revendications précédentes 1 ou 3 à 14,
**caractérisée en ce qu'**
elle est réalisée sous la forme d'une centrifugeuse à vis à bol plein comportant, de chaque côté d'un tambour rotatif (101) en tant que système de paliers, respectivement au moins un palier (104, 105) respectivement monté dans un boitier annulaire (122), le ou les dispositif(s) d'injection (13) permettant de fournir de l'agent de lubrification, provenant d'au moins un réservoir d'agent de lubrification (15) dans la zone de l'un ou des deux paliers (104, 105).

18. Centrifugeuse conforme à la revendication 17,
**caractérisée en ce que**
l'axe de rotation (H) est orienté horizontalement et le boitier (122) comporte un perçage (115) permettant de fournir l'agent de lubrification dans la zone de l'un ou des deux paliers (104, 105), au-dessus de ce palier ou latéralement à celui-ci sur la broche horizontale.

19. Centrifugeuse conforme à la revendication 17 ou 18,
**caractérisée en ce qu'**
il est prévu au-dessous du palier respectif (104, 105) un canal d'évacuation (118) ou deux canaux d'évacuation (118a, 118b) qui débouche(nt) directement ou par l'intermédiaire d'un autre canal d'évacuation dans un réservoir de collecte d'agent de lubrification (120).

20. Centrifugeuse conforme à la revendication 17, 18 ou 19,
**caractérisée en ce que**
le perçage (115) comporte une buse ou est réalisé sous la forme d'une buse de préférence en avant de sa sortie.

21. Centrifugeuse conforme à la revendication 17, 18, 19 ou 20,
**caractérisée en ce qu'**
il est prévu des garnitures d'étanchéité des deux côtés du palier (104, 105).

22. Procédé de transfert d'agent de lubrification dans la zone d'au moins un palier pour une centrifugeuse conforme à l'une des revendications précédentes,
**caractérisé en ce qu'**
à l'aide d'au moins un huileur d'injection on injecte respectivement un mélange huile/air par impulsions dans la zone du ou des palier(s).
